**Europäisches Patentamt**

**European Patent Office**

**Office européen des brevets**

(19)

(11) Numéro de publication: **0 018 278**
**A1**

# DEMANDE DE BREVET EUROPEEN

(21) Numéro de dépôt: **80400495.0**

(22) Date de dépôt: **15.04.80**

(51) Int. Cl.³: **E 02 F 9/18,** B 65 G 65/02, B 66 C 23/72

(30) Priorité: **24.04.79 FR 7910299**

(71) Demandeur: **FIVES-CAIL BABCOCK, Société anonyme, 7,rue Montalivet, F-75383 Paris Cedex 08 (FR)**

(43) Date de publication de la demande: **29.10.80 Bulletin 80/22**

(72) Inventeur: **Grandin, Daniel, 1, rue Jean-Pierre Laurens, F-92260 Fontenay-aux-Roses (FR)**

(84) Etats contractants désignés: **BE DE GB IT NL**

(74) Mandataire: **Fontanié, Etienne, 7, rue Montalivet, F-75383 Paris Cedex 08 (FR)**

(54) **Appareil de manutention de matériaux en vrac.**

(57) Un appareil de manutention de matériaux en vrac comprend un châssis (1) sur lequel est monté un support (12) qui est muni d'au moins un axe d'articulation horizontal (16) autour duquel est monté inclinable un ensemble constitué par une flèche (4) portant un transporteur à bande (5), une contre-flèche (7) à contrepoids d'équilibrage (8) décalée vers le haut par rapport à la flèche (4) et un mât (9) solidarisant la flèche (4) et la contreflèche (7).

Pour éviter d'importants déplacements du centre de gravité de l'ensemble (4, 7 et 9) lorsque ce dernier bascule, l'axe d'articulation (16) est disposé à un niveau supérieur à celui de l'extrémité du transporteur de flèche (5) la plus proche dudit axe, préférablement au niveau dudit centre de gravité.

<u>Appareil de manutention de matériaux en vrac</u>

La présente invention concerne un appareil de manutention de matériaux en vrac tel qu'un appareil de chargement de navires, un appareil de mise en tas, un appareil de reprise ou un appareil mixte de mise en tas et de reprise.

On connaît déjà des appareils de ce genre comprenant une flèche munie d'un transporteur à bande, ladite flèche, inclinable autour d'un axe d'articulation horizontal solidaire d'un support monté sur le châssis de l'appareil, étant équilibrée au moyen d'un contrepoids. Un transporteur-élévateur d'alimentation déverse les matériaux sur la bande du transporteur par l'intermédiaire d'une goulotte.

Suivant une première disposition dite "à poutre unique" le contrepoids d'équilibrage est porté par une structure disposée dans le prolongement de la flèche du côté opposé à l'axe d'articulation.

Une telle disposition conduit à prévoir un transporteur-élévateur de grande longueur et à forte élévation afin d'amener les matériaux au-dessus du transporteur de flèche tout en évitant la trajectoire du contrepoids. Dans le cas d'un appareil de mise en tas de grande portée, par exemple, la masse du contrepoids devient prohibitive étant donné la faible longueur du bras de levier dont on dispose pour supporter ledit contrepoids.

Pour éviter ces inconvénients, on a déjà proposé une deuxième disposition suivant laquelle le contrepoids est porté par une contreflèche décalée vers le haut par rapport à la flèche, un mât solidarisant la flèche et la contreflèche avec lesquelles il constitue un ensemble inclinable. Cet ensemble est monté basculant autour de l'axe d'articulation à l'extrémité inférieure du mât. L'axe d'articulation est alors situé à un niveau inférieur à celui de l'extrémité de la bande du transporteur de flèche qui reçoit les maté-

- .2 -          0018278

riaux déversés par le transporteur-élévateur.

Une telle disposition présente l'inconvénient d'entraîner d'importants déplacements du centre de gravité de l'ensemble précité lorsque celui-ci bascule, chaque fois que l'on est amené à faire varier l'inclinaison de la flèche. On es alors conduit à dimensionner largement le châssis et le support de l'axe d'articulation solidaire dudit châssis. Lorsque, comme cela est généralement le cas, le support est monté pivotant autour d'un axe vertical sur le châssis il est indispensable de prévoir des moyens de liaison inte médiaires tels qu'une couronne à roulements et des galets. Ces moyens doivent également être dimensionnés en conséque ce. La réalisation de l'appareil s'avère de ce fait particulièrement onéreuse.

L'invention a surtout pour but d'éviter les inconvénients précités grâce à une disposition permettant de placer l'ax d'articulation sensiblement au niveau du centre de gravité de l'ensemble inclinable. En pratique, l'axe d'articulatio sera disposé à un niveau tel que la distance séparant ledi axe du centre de gravité de l'ensemble inclinable, soit inférieure au tiers de la distance séparant ledit centre de gravité de l'extrémité du brin supérieur de la bande du transporteur de flèche la plus proche dudit axe.

Elle a plus précisément pour objet un appareil de manutention de matériaux en vrac comprenant un châssis sur lequel est monté un support qui est muni d'au moins un axe d'arti culation horizontal autour duquel est monté inclinable un ensemble constitué par une flèche portant un transporteur bande, une contreflèche à contrepoids d'équilibrage décalé vers le haut par rapport à la flèche et un mât solidarisan la flèche et la contreflèche, caractérisé en ce que l'axe d'articulation horizontal est disposé à un niveau supérieu à celui de l'extrémité du transporteur de flèche la plus proche dudit axe, préférablement au niveau du centre de gravité de l'ensemble inclinable.

- 3 -          0018278

Lorsque l'appareil de manutention comporte un transporteur-élévateur d'alimentation apte à déverser les matériaux sur la bande du transporteur de flèche, l'axe d'articulation horizontal est disposé à un niveau intermédiaire entre celui de l'extrémité du brin supérieur de la bande du transporteur de flèche qui reçoit les matériaux déversés par le transporteur-élévateur et celui de l'extrémité supérieure dudit transporteur-élévateur, et préférablement au niveau du centre de gravité de l'ensemble inclinable.

Dans ce dernier cas, l'axe d'articulation de l'ensemble inclinable sera, en pratique, disposé à un niveau tel que la distance séparant ledit axe du centre de gravité dudit ensemble, soit également inférieure au tiers de la distance séparant ledit centre de gravité de l'extrémité supérieure du transporteur-élévateur.

Le support est muni de deux axes d'articulation horizontaux de même diamètre, disposés dans l'alignement l'un de l'autre, lesdits axes étant respectivement supportés par deux montants verticaux du support disposés parallèlement, deux bras solidaires du mât étant respectivement montés pivotants autour des dits axes.

Les deux axes d'articulation sont avantageusement disposés à l'extérieur de l'intervalle séparant les montants.

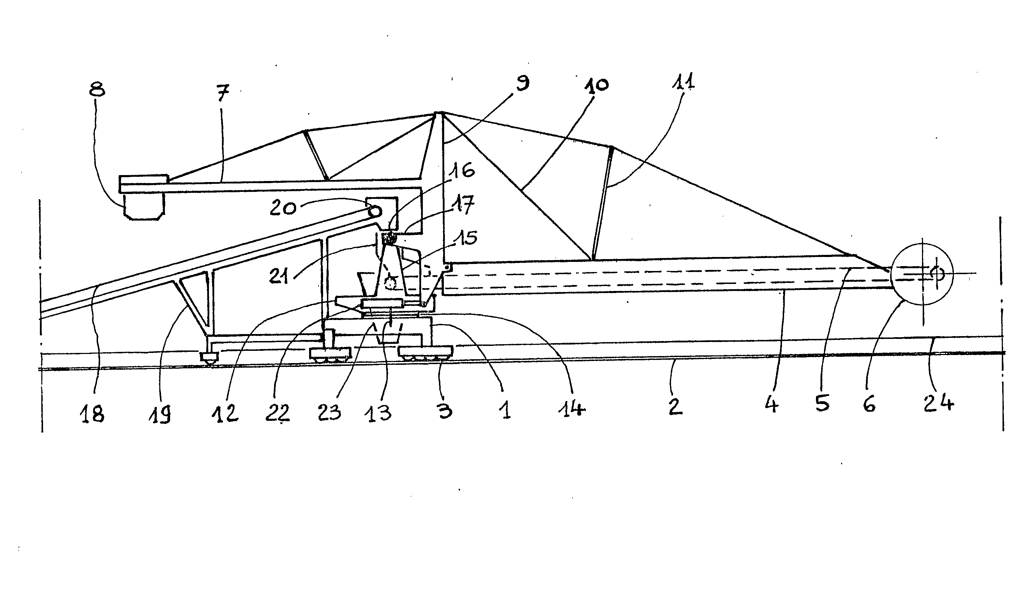

L'invention sera mieux comprise en se référant à la description qui suit, faite en regard du dessin annexé, concernant une forme particulière de réalisation donnée à titre d'exemple non limitatif.

La figure unique est une vue en élévation d'un appareil de manutention de matériaux en vrac prévu pour la mise en tas et la reprise des dits matériaux.

Sur la figure, le repère 1 désigne le châssis de l'appareil qui est monté déplaçable le long d'une voie 2 disposée, par

- 4 -                    0018278

exemple, sur une banquette aménagée entre deux tas s'étendant longitudinalement de part et d'autre de ladite banquette. La voie 2 est formée par des rails sur lesquels viennent
rouler des galets 3 prévus à la base du châssis 1.

Le repère 4 désigne une flèche portant un transporteur 5 à
bande réversible et dont l'extrémité libre est munie d'une
roue-pelle 6. Le repère 7 désigne une contreflèche parallèle à la flèche 4 et décalée vers le haut par rapport à cette
dernière. L'extrémité libre de la contreflèche 7 est munie
d'un contrepoids d'équilibrage 8. Le repère 9 désigne un
mât qui solidarise la flèche 4 et la contreflèche 7. La
flèche 4 est rendue solidaire du mât 9 au moyen d'un système triangulé de tirants, telsque 10, et de poinçons, tels
que 11. Un système analogue est associé à la contreflèche 7.

La flèche 4, la contreflèche 7, le mât 9 et les systèmes
triangulés qui leur sont associés constituent un ensemble
rigide monté basculant, dans des conditions qui seront
précisées par la suite, sur un support 12. Ce dernier est
monté pivotant autour d'un axe vertical 13 sur le châssis 1
par l'intermédiaire d'une couronne à roulements 14. Le support 12 présente deux montants verticaux, tels que 15, disposés parallèlement. La partie supérieure du montant 15 est
munie d'un axe horizontal 16 autour duquel est monté pivotant un bras 17 du mât 9. La partie supérieure du montant
parallèle au montant 15 est munie d'un axe horizontal de
même diamètre que l'axe 16 et disposé dans l'alignement de
ce dernier. Un bras du mât 9, homologue du bras 17, est mont
pivotant autour de l'axe horizontal homologue de l'axe 16.

Le repère 18 désigne un transporteur-élévateur prévu pour
assurer l'alimentation en matériaux en vue d'une opération
de mise en tas. Ce transporteur, à bande par exemple, est
monté sur un châssis 19 déplaçable le long de la voie 2
avec le châssis 1. Au niveau du tambour de tête 20 constituant l'extrémité supérieure du transporteur 18, les matériaux sont déversés sur la bande 5 par l'intermédiaire d'une goulotte 21 aménagée entre les deux montants, tels que 15. La bande 5 circule dans le sens approprié pour transporter les matériaux à mettre en tas vers l'extrémité libre de la flèche 4.

Les deux axes d'articulation, tels que 16, sont disposés à un niveau intermédiaire entre celui de l'extrémité du brin supérieur de la bande du transporteur 5 qui reçoit les matériaux déversés par le transporteur-élévateur 18, et celui de l'extrémité supérieure dudit transporteur-élévateur. Ces deux axes sont respectivement supportés par les montants, tels que 15, à l'extérieur de l'intervalle séparant lesdits montants.

Deux vérins, tels que 22, montés symétriquement de part et d'autre du support 12, commandent le basculement de l'ensemble précédemment défini autour des deux axes d'articulation, tels que 16. A cet effet, la tige d'un vérin, tel que 22, est accouplée à l'extrémité inférieure du mât 9.

Lors d'une opération de reprise, le transporteur-élévateur 18 est arrêté et le sens de circulation de la bande du transporteur 5 est inversé. La roue-pelle 6 déverse les matériaux prélevés au tas sur la bande du transporteur 5 qui les déverse, par l'intermédiaire d'une goulotte 23, sur un transporteur à bande 24 parallèle aux rails 2.

Quelle que soit l'opération en cours, mise en tas ou reprise, l'ensemble basculant peut également pivoter avec le support 12 autour de l'axe vertical 13. Dans le cas de la figure, on a représenté ledit ensemble orienté suivant la direction de la voie 2.

L'appareil que l'on vient de décrire présente de multiples avantages.

Le centre de gravité de l'ensemble basculant étant situé au voisinage du plan horizontal passant par les deux axes d'articulation, tels que 16, toute variation d'inclinaison dudit ensemble n'entraîne que de faibles déplacements du centre de gravité. Cela permet de réaliser de substantielles économies dans la construction du châssis 1 et de la couronne 14.

Pour un état de chargement donné les sollicitations dans l'ensemble basculant sont approximativement constantes. En fait, elles varient uniquement avec le cosinus de l'angle d'inclinaison par rapport à la position moyenne dudit ensemble.

Il devient possible de faire appel à des vérins de moindre puissance que dans les appareils usuels, compte tenu de la longueur plus importante du bras de levier à l'extrémité duquel chaque tige de vérin exerce son action.

L'ensemble basculant constituant un système mécaniquement rigide, est d'une grande simplicité de réalisation.

Bien que l'invention ait été décrite en référence à une forme particulière de réalisation, il va de soi qu'elle n'y est en rien limitée et que des modifications peuvent lui être apportées sans sortir de son domaine.

Dans le cas d'un appareil de mise en tas ou d'un appareil de chargement de navires, certains éléments décrits (roue-pelle 6, goulotte 23, transporteur 24) deviennent inutiles. Il est par ailleurs sans objet de prévoir un transporteur 5 à bande réversible.

Dans le cas d'un appareil de reprise, les axes d'articulation 16 seront situés à un niveau supérieur à celui de l'extrémité du brin supérieur de la bande du transporteur de flèche 5 la plus proche des dits axes. Il n'est alors prévu aucun transporteur-élévateur tel que 18.

Il est possible de remplacer les deux axes, tels que 16,

0018278

par un axe d'articulation unique monté entre les deux montants, tels que 15, du support 12. Les deux bras, tels que 17, du mât 9 pourront alors être montés pivotants autour dudit axe entre les dits montants.

On pourra, bien entendu, remplacer l'un quelconque des moyens décrits par un moyen techniquement équivalent.

L'invention couvre donc, outre l'exemple décrit, ses différentes variantes de réalisation possibles.

- 1 -

0018278

Revendications de brevet

1. Appareil de manutention de matériaux en vrac comprenant un châssis sur lequel est monté un support qui est muni d'au moins un axe d'articulation horizontal autour duquel est monté inclinable un ensemble constitué par une flèche portant un transporteur à bande, une contreflèche à contrepoids d'équilibrage décalée vers le haut par rapport à la flèche et un mât solidarisant la flèche et la contreflèche, caractérisé en ce que l'axe d'articulation horizontal (16) est disposé à un niveau supérieur à celui de l'extrémité du transporteur de flèche (5) la plus proche dudit axe, de préférence sensiblement au niveau du centre de gravité de l'ensemble inclinable (4, 7 et 9).

2. Appareil de manutention suivant la revendication 1, comprenant un transporteur-élévateur d'alimentation apte à déverser les matériaux sur la bande du transporteur de flèche, caractérisé en ce que l'axe d'articulation horizontal (16) est disposé à un niveau intermédiaire entre celui de l'extrémité du transporteur de flèche (5) qui reçoit les matériaux déversés par le transporteur-élévateur (18) et celui de l'extrémité supérieure dudit transporteur-élévateur, et de préférence sensiblement au niveau du centre de gravité de l'ensemble inclinable (4, 7 et 9).

3. Appareil de manutention suivant l'une des revendications 1 ou 2, caractérisé en ce que le support (12) est muni de deux axes d'articulation horizontaux (16) de même diamètre, disposés dans l'alignement l'un de l'autre, les dits axes étant respectivement supportés par deux montants verticaux (15) du support (12) disposés parallèlement, deux bras (17) solidaires du mât (9) étant respectivement montés pivotants autour des dits axes.

4. Appareil de manutention suivant la revendication 3, caractérisé en ce que les deux axes d'articulation (16) sont disposés à l'extérieur de l'intervalle séparant les montants (15).

| Catégorie | Citation du document avec indication, en cas de besoin, des parties pertinentes | Revendication concernée |
|---|---|---|
| | DE - C - 939 019 (AG FÜR UNTERNEHMUNGEN DER EISEN- UND STAHLINDUSTRIE) * page 2, lignes 50 à 76 * -- | 1 |
| | DE - C - 1 047 124 (AG FÜR UNTERNEHMUN- GEN DER EISEN- UND STAHLINDUSTRIE) * colonne 1, ligne 1 à colonne 2, ligne 22 * -- | 1 |
| A | FR - A - 1 505 747 (BETEILIGUNGS- UND PATENTVERWALTUNGSGESELLSCHAFT MBH) -- | |
| A | FR - A - 2 242 321 (FIVES LILLE CAIL) -- | |
| A | DE - A - 2 258 684 (F. KRUPP) ---- | |

## DOCUMENTS CONSIDERES COMME PERTINENTS

**CLASSEMENT DE LA DEMANDE (Int. Cl.³)**

E 02 F 9/18
B 65 G 65/02
B 66 C 23/72

**DOMAINES TECHNIQUES RECHERCHES (Int. Cl.³)**

B 65 G 63/00
B 65 G 65/00
B 65 G 67/00
B 66 C 23/00
E 02 F 9/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X Le présent rapport de recherche a été établi pour toutes les revendications

| Lieu de la recherche | Date d'achèvement de la recherche | Examinateur |
|---|---|---|
| Berlin | 17-07-1980 | SIMON |

OEB Form 1503.1  06.78